# EUROPEAN PATENT SPECIFICATION

(11) **EP 3 511 335 B1**
(45) Date of publication and mention of the grant of the patent: **07.10.2020**
(21) Application number: 18151027.2
(22) Date of filing: 10.01.2018
(51) Int. Cl.: C07F 7/00

(54) **MANUFACTURE OF METALLASILISESQUIOXANES**
HERSTELLUNG VON METALLASILSESQUIOXANEN
FABRICATION DE MÉTALLASILISESQUIOXANES

(43) Date of publication of application: 17.07.2019
(73) Proprietor: Nitrochemie Aschau GmbH, 84544 Aschau am Inn (DE)
(72) Inventor: LANGERBEINS, Klaus, 50259 Pulheim (DE); KRUPP, Alexis, 84478 Waldkraiburg (DE); SCHERSCHLICHT, Karl Heinz, 84453 Mühldorf am Inn (DE); GERRITSEN, Gijsbert, 5615 SZ Eindhoven (NL); ABBENHUIS, Hendrikus Cornelis Louis, 5707 HS Helmond (NL); PICHL, Ulrich, 84544 Aschau am Inn (DE)
(74) Representative: Müller Schupfner & Partner Patent- und Rechtsanwaltspartnerschaft mbB

(56) References cited:
- EP-A1- 1 213 292
- US-A1- 2006 009 604

## Description

This invention relates to the field of metalorganic compounds and the synthesis thereof.

Numerous processes for preparing polyhedral oligo silsesquioxanes metal or metalloid compounds hereinafter also "metal POSS" compounds are known in the prior art.

Buys et al. (J. Mol. Catalysis, 86, 1994, 309 - 318) describe an amine-assisted metathesis to produce metallasilisesquioxanes based on the general formula (C₆H₁₁)₇Si₇O₁₂M(C₅H₅) (with M = Ti, Zr and Hf) by the addition of metal halides such as (C₅H₅)TiCl₃ to a trisilanol silsesquioxane ((C₆H₁₁)₇Si₇O₉(OH)₃).

It is well known in the literature that POSS can be obtained from the hydrolytic condensation of silane compounds having the general formula RSiCl₃ (cf. F.J. Feher, D. N. Newman and J.F. Walzer, J.Am.Chem.Soc.1989, M. G. Voronkov and V. I. Lavrent'yev, Top. Curr. Chem. 1982, 102, 199, F.J. Feher and Z. A. Budzinchowski, J. Organomet. Chem. 1989, 373, 153.) However these reaction sequences are laborious, including time consuming work-up procedures, or result in mixtures of POSS and/or metal POSS compounds.

US 6,972,312 reported a route to R₇Si₇O₉(OH)₃ utilizing base catalysed polycondensation to convert polymeric silsesquioxanes or siloxanes into POSS structures such as R₇Si₇O₉(OH)₃ selectively. Nethertheless neutralization with aqueous acid, such as hydrochloric acid and filtration followed by further extraction steps were necessary to isolate R₇Si₇O₉(OH)₃, which can be processed in a separate step with metal complexes to result into the desired Metal POSS.

Feher et al. (Polyhedron 1995, pp. 3239 - 3253) report multistage syntheses, resulting in metallasilsesquioxanes utilizing R₇Si₇O₉(OH)₃. These POSS compounds are converted with various metal complexes like O=VCl₃, CpTiCl₃, CrCl₃(NMe₃)₂. Such complex processes are fault-prone as well as time consuming.

EP 1 213 292 A1 describes oligomeric silsesquioxanes of the formula R₆Si₆O₉ (R = alkyl, cycloalkyl (c-C₃H₅, c-C₄H₇, c-C₅H₉, c-C₇H₁₃, c-C₈H₁₅, c-C₉H₁₇, c-C₁₀H₁₉), alkenyl, cycloalkenyl, alkynyl, cycloalkynyl, aryl, heteroaryl).

Historically the substitution pattern of polyhedral oligo silsesquioxanes (POSS) was strictly limited to hydrophobic alkyl or cycloalkyl groups such as cyclohexyl, cyclopentyl or cycloheptyl (see M. G. Voronkov and V. I. Lavrent'yev, Top. Curr. Chem. 1982, 102, 199). Today the steric parameters for the side chain R of the respective silane precursors as well as the reaction conditions can be adjusted to widen the scope of the possible substitution patterns of metallasilsesquioxanes. This affords a flexible and adjustable synthesis.

Therefore one objective of the present invention is to provide an optimized process for the production of metallasilsesquioxanes, in particular to overcome at least one disadvantage of the processes described in the prior art.

One further particular objective is to allow a safe production of metallasilsesquioxanes, which also preferably is less complex.

### SUMMARY OF THE INVENTION

These objectives are solved by a process for the synthesis of a metallasilsesquioxane comprising the steps of:
(a) preparing a composition (hereinafter also referred to as "reaction mixture") containing at least one silane compound having the general formula R¹Si(OR²)₃ with R¹, R² are each independently hydrogen, alkyl, cycloalkyl, alkenyl, alkynyl, aryl or heteroaryl and at least one base, and (b) adding to said composition at least one transition metal halide, wherein the process is a one-pot process.

In contrast to the prior art the present invention teaches a one-pot process, for the synthesis of metallasilsesquioxanes utilizing base catalysed polycondensation of readily available silanes as starting materials to afford metallasilsesquioxanes. This process therefore allows a less complex, recource-saving and safe production of metallasilsesquioxanes

Surprisingly it was found that the process of the present invention comprising the steps (a) and (b) can be carried out as a one-pot process. It was found that no separation or extraction of any silane intermediates, in particular silsesquioxane trisilanol compounds such as R₇Si₇O₉(OH)₃, is necessary to afford metallasilsesquioxanes. Therefore a sustainable and time saving process is provided.

In a particular preferred embodiment of the invention no separation or extraction of any intermediates is necessary to afford metallasilsesquioxanes.

The silane as a starting material can be added to any base and any solvent. This allows to encompass a process, tolerable towards many different substitution patterns and preferably provides a broad variety of the resulting metallasilsesquioxanes.

Preferably the silane is added to any base and at least one polar solvent. Generally step (a) of the present invention can be conducted with any polar solvent, but in a particularly preferred embodiment, at least one polar solvent is water.

In this context it has surprisingly been found that the amount of water, present in the composition of step (a), can play a vital role for a particularly efficient synthesis of the resulting metallasilsesquioxanes. Therefore in a preferred embodiment the composition of step (a) of the present invention is prepared with a molar ratio of R¹SiX₃ to base and water of 3 - 8 : 1 - 7 : 0.5 -10 equivalents per mole of the metal compound, preferably of 5 - 7 : 2 - 5 : 1 - 8 equivalents per mole of the metal compound, most preferably with 5 - 6 : 3 - 4 : 1 - 7 equivalents per mole of the metal compound.

In a most preferred embodiment the composition of step (a) is prepared with a molar ratio of R¹SiX₃ to base and water of 5 - 6 : 3 - 4: 5 - 6 equivalents per mole of the metal compound.

### DETAILED DESCRIPTION OF THE INVENTION

The process for the synthesis of a metallasilsesquioxane comprises the steps of (a) preparing a composition containing at least one silane compound having the general formula R¹Si(OR²)₃ with R¹ and R² being independently hydrogen, alkyl, cycloalkyl, alkenyl, alkynyl, aryl or heteroaryl; preferably R¹ and R² are independently alkyl or aryl, most preferably methyl, ethyl, iso-propyl, iso-butyl, hexyl, octyl or phenyl.

Suitable representatives of R¹ are most preferably selected from the group consisting of iso-propyl, iso-butyl, hexyl, octyl, phenyl or a combination thereof.

R² is most preferably selected from the group consisting of methyl, ethyl, propyl, butyl or a combination thereof.

In a most preferred embodiment the silane, having the formula R¹Si(OR²)₃, is iso-propyltrimethoxysilane, iso-propyltriethoxysilane iso-butyltrimethoxysilane (IBTMO), iso-butyltriethoxysilane, hexyltrimethoxysilane, hexyltriethoxysilane, octyltrimethoxysilane, octyltriethoxysilane, phenyltrimethoxysilane or phenyltriethoxysilane, most preferred are iso-butyltrimethoxysilane (IBTMO) or octyltrimethoxysilane.

In a preferred embodiment a solvent can be added to the composition of step (a).

The solvent can be added to the silane before the base is added, when conducting step (a).

In a more preferred embodiment the silane is added to a solution comprising the base and the solvent.

Generally any solvent can be utilised during the preparation of the composition in step (a). In a preferred embodiment step (a) is conducted with polar sovents, even more preferred is the addition of polar protic solvents during step (a) of the present invention, most preferred polar protic solvents are particularly water, ethanol or a combination thereof.

Suitable representatives of polar solvents can be selected from the group consisting of water, alkanols, iso-alkanols, ketones, carboxylic acids, dihalomethanes, alkyl ethers, alkyl nitriles, sulfoxides, alkyl formamides, phenols or combinations thereof. More preferred representatives are selected from the group consisting of water, alkanols, iso-alkanols, carboxylic acids or combinations thereof, even more preferred representatives are selected from the group consisting of water, ethanol, tert-butanol, isopropanol, acetic acid or combinations thereof, most preferred representatives are selected from the group consisting of water, ethanol, or a combination thereof.

In a particularly preferred embodiment, at least one polar solvent present in the composition is water.

Preferably the concentration of one solvent, preferably one polar solvent, is from 0.5 to 10 equivalents per mole R¹Si(OR²)₃, preferably from 0.8 to 5 equivalents per mole R¹Si(OR²)₃, more preferably from 1 to 4 equivalents per mole R¹Si(OR²)₃.

The composition of step (a) comprises in a further embodiment at least two polar solvents. When conducting the reaction step (a), preferably at least one of the two polar solvents is water.

The molar ratio of silane to base and polar solvent, which is preferably water, can vary. Advantageous results can be achieved when the process of the present invention is conducted so as the molar ratio of R¹SiX₃ to base and water is 3 - 8 : 1 - 7 : 0.5 -10 equivalents per mole of the metal compound, preferably 5 - 7 : 2 - 5 : 1 - 8 equivalents per mole of the metal compound, more preferably 5 - 6 : 3 - 4 : 1 - 7 equivalents per mole of the metal compound, most preferably 5 - 6 : 3 - 4 : 5 - 6 equivalents per mole of the metal compound.

When step (a) of the present invention is conducted with two polar solvents the concentration of these two solvents can vary. Preferably the concentration of one polar solvent, preferably water, is 0.5 to 10 equivalents per mole of the metal compound and the amount of at least one additional polar solvent, preferably an alcohol, most preferably ethanol, is at least 10 equivalents per mole of the metal compound.

In a more preferred embodiment the concentration of one polar solvent is 1 to 8 equivalents per mole of the metal compound and the concentration of an additional polar solvent is at least 15 equivalents per mole of the metal compound.

In a most preferred embodiment the concentration of one polar solvent is 1 to 7 equivalents per mole of the metal compound and the concentration of at least one additional polar solvent is at least 20 equivalents per mole of the metal compound.

In a particularly preferred embodiment the concentration of one polar solvent is 5 to 6 equivalents per mole of the metal compound and the concentration of the additional polar solvent is at least 20 equivalents per mole of the metal compound.

The reaction step (a) generally involves any base. In a preferred embodiment the base is selected from the group consisting of metal hydroxides, metal alkoxides, metal alkyls, metal carboxylates, metal carbonates, metal silanolates, quarternary ammonium derivatives, metal carbonates, conjugate bases of weak acids, carbonate salts of organic cations, carbanions, metal amides, amines, alkanolamines, or combinations thereof.

In a more preferred embodiment the base is selected from the group consisting of alkali metal hydroxides, alkali metal alkoxides, alkali metal carboxylates or combinations thereof, preferably lithium hydroxide, lithium alkoxides, lithium carboxylates, alkyllithium, alkenyllithium and aryllithium or combinations thereof. In yet another preferred embodiment sodium hydroxide, sodium alkoxides, sodium carboxylates, alkylsodium, alkenylsodium and arylsodium or combinations thereof can be used. Also a combination of lithium hydroxide and sodium hydroxide can be advantageous.

The base is most preferably lithium hydroxide, in particular lithium hydroxide monohydrate.

The amount of the base used in the process can vary. Preferably the concentration of the base is in the range from 0.2 to 10 equivalents per mole R¹Si(OR²)₃. In a more preferred embodiment the concentration of the base is in the range from 0.5 to 1 equivalents per mole R¹Si(OR²)₃. Most preferably the concentration of the base is in the range from 0.6 to 0.9 equivalents per mole R¹SiX₃.

The silane can be added at any rate, but in a preferred embodiment the silane is added at such a rate so as to maintain a constant reaction temperature. Generally the addition of the silane is conducted by cooling the composition to at least 40 °C, preferably to at least 30 °C, most preferably to at least 10 °C before the metal compound is added.

Furthermore it was found that the silane can be added to a heated composition. Preferably the addition of the silane is conducted by heating the composition to at least the boiling point of the solvent. In an even more preferred embodiment the addition of the silane is conducted by heating the composition to at least 50 °C, preferably to at least 60 °C, most preferably to at least 70 °C.

The addition of at least one metal compound, herein also referred to as step (b) of the present invention, can be conducted directly after the addition of the respective base. Step (b) preferably comprises heating the composition, before the metal compound is added.

In the context of the present invention the metals (M) of the "metal compound" can preferably be selected from main group metals, main group metalloids as well as transition metals or a combination thereof.

Suitable representatives of the metals (M) are selected from the metals of the main groups 13, 14, 15 or from the metals of the subgroups 3., 4., 5., 6., 7., 8., 9, 10. and 11.

Preferred representatives of main group metals or metalloids are members selected from the main groups 13, 14, 15, 16 or 17 or combinations thereof, preferably selected from the metals or metalloids of the main groups 13, 14, 15 or 16 or combinations thereof, most preferably the metals or metalloids are selected from the group consisting of boron, aluminium, gallium, indium, silicon, germanium, tin, antimony, bismuth, selenium, tellurium or combinations thereof.

In a more preferred embodiment the metals (M) of the metal compound are selected from metals of the subgroups 3., 4., 5., 6., 7., 8., 9, 10. and 11. Preferred representatives of transition metals are selected from the group consisting of titanium, zirconium, vanadium, chromium, molybdenum, manganese, iron, ruthenium, cobalt, nickel, copper, zinc or combinations thereof.

In a most preferred embodiment the transition metal of the transition metal compound is a member selected from the metals of subgroup 4, most preferably titanium.

Suitable counterions of the metal compound can be selected from the group consisting of alkoxides, halides or oxides. In a most preferred embodiment the counterion is a halide, particularly chloride.

In a preferred embodiment step (b) can be conducted by heating the composition to at least a boiling point of a solvent in the composition, preferably to at least 50 °C, before the metal compound is added. In a more preferred embodiment the composition can be heated to at least 60 °C, before the metal compound is added. The composition is heated most preferably to at least 70 °C, before the metal compound is added.

In an even more preferred embodiment step (b) of the present invention comprises heating or cooling the composition before the metal compound is added. The composition can be cooled to at least 10 °C, preferably to at least 0 °C, most preferably to at least -5 °C.

The metal compound can be added directly after heating the composition to a predetermined temperature as described above. In a preferred embodiment step (b) can be conducted 1 to 24 h after the composition had been prepared. In a more preferred embodiment the duration of step (a) is 2 to 20 h, before the metal compound is added to the composition (step (b)).

In a further embodiment step (b) of the present invention can be conducted when a compound having the general formula R₇Si₇O₉(OH)₃, R₇Si₇O₉(OM¹)₃ or a combination thereof, is detectable in the reaction mixture. Various detection methods are used routinely in the art and are well known to the skilled person, particularly nuclear magnetic resonance ("NMR") techniques can be used.

In a preferred embodiment M¹ is a member selected from the metals of the main groups 1., 2., or combinations thereof, preferably M¹ is a member of the metals of the main group 1 or combinations thereof.

When conducting step (b) of the present invention the metal compound can generally be added to the composition without adding a solvent. However in a preferred embodiment at least one solvent is added to the metal compound, before the metal compound is added to the composition.

In a more preferred embodiment said solvent is a non-polar solvent, more preferred representatives are selected from the group consisting of hydrocarbons, aromatic hydrocarbons, tetrachloromethane, chloroform, alkoxyalkanes, cyclic alkoxyalkanes, dialkoxyalkanes or combinations thereof, most preferred representatives are aromatic hydrocarbons, in particular toluene.

In a preferred embodiment the redox potential of said transition metal compound is below -1 V at pH 14.

In a most preferred embodiment step (b) of the present invention is conducted with a transition metal compound, particularly with titanium tetrachloride.

In a preferred embodiment the resulting metallasilsesquioxane is having the formula R₇Si₇O₁₂ML. In an even more preferred embodiment of the present invention suitable representatives of L are selected from the group consisting of hydroxides, alkoxides, iso-alkoxides, enolates, carboxylates, dihalomethanides, (alkoxy)methanides, keteniminates, sulfinylmethanides, alkyl formamides, phenoxides or combinations thereof, preferably selected from the group consisting of hydroxide, methoxide, ethoxide, isopropoxide, isobutoxide, acetone enolate, acetonitrile anion, phenoxide, or combinations thereof, most preferred are alkoxides, particularly ethoxide.

When conducting the process of the present invention, the work-up of the composition (step c - hereinafter also referred to as the separation step), preferably comprises the separation of the metallasilsesquioxane, preferably having the formula R₇Si₇O₁₂ML, by any of the following separation methods: medium change, distillation, filtration, evaporation, decantation, crystallization, pressure reduction, or extraction, or combinations thereof, preferably a medium change.

The medium change is particularly performed by transferring the metallasilsesquioxane into a carrier system. Therewith a master batch can be provided.

Suitable representatives of carrier systems for example are, but are not limited to: natural or synthetic waxes, natural or synthetic polymers, silanes, such as hardeners or adhesion promoters, plasticisers or combinations thereof. Preferred are plasticisers, particularly silicone oils.

Most preferred carrier systems are such components, which also form parts of the final composition to which the master batch comprising metallasilsesquioxanes can be added.

The separation of the metallasilsesquioxane from the composition can be improved when a polysiloxane compound, preferably a trimethylsilyl terminated polydimethylsiloxane (e.g. WM from Dow C.), is added as a carrier system to the reaction mixture. The medium change can be conducted after the metal compound was added to the composition. In a preferred embodiment the addition of a polysiloxane compound is done before, during or after further purification steps, such as distillation, evaporation or filtration.

The process of the present invention can be conducted in a more preferred embodiment by (a) preparing a composistion containing at least one compound having the general formula R¹SiX₃ with X being independently a halide, OR² or NR³R⁴; and R¹, R², and R³ and R⁴ are each independently hydrogen, alkyl, cycloalkyl, alkenyl, aryl or heteroaryl; a metal hydroxide; and a polar solvent (b) adding to said composition titanium tetrachloride and a non-polar solvent, wherein the process is a one-pot process.

In a more preferred embodiment the process can be conducted for the synthesis of a titanasilsesquioxane comprising the steps of: (a) preparing a composistion containing at least one compound having the general formula R¹Si(OR²)₃, wherein R¹ and R² are each independently alkyl or aryl, an alkali metal hydroxide and a polar solvent selected from the group consisting of water, alkanols or iso-alkanols, or combinations thereof and; (b) adding to said composition titanium tetrachloride and a non-polar solvent selected from the group consisting of hydrocarbons or aromatic hydrocarbons, preferably toluene, wherein the process is a one-pot process.

In a most preferred embodiment the process of the present invention is used for the synthesis of a titanasilsesquioxane comprising the steps of: (a) preparing a composistion containing iso-butyltrimethoxysilane (IBTMO), lithium hydroxide monohydrate, water and ethanol and; (b) adding to said composition titanium tetrachloride and toluene, wherein the process is a one-pot process.

### DEFINTIONS

"POSS" (i.e. polyhedral oligomeric silisesquioxanes), comprise organosilicic three dimensional compounds with open or closed cage frameworks having different degrees of symmetry. These three dimensional polyhedral frameworks are build up by at least two overlapping two-dimensional surfaces of atoms.

"Metal POSS" refers to POSS compounds incorporating at least one metal in their three dimensional open or closed cage framework.

"one-pot" process or one stage process means for the pruposes of the present invention that the preparation of the product is accomplished, without any extraction and/or purification steps of intermediates.

The term "transition metal" refers to any element whose atom has a partially filled d or f sub-shell, or which can give rise to cations with an inclomplete d or f sub-shell. It includes any element in the d-block of the periodic table i.e. including groups 3 to 12 on the periodic table and the f-block lanthanide and actinide series.

The term "main group metal" refers to any metals that occur in the main groups 1, 2, 13, 14 or 15. Preferred examples of main group metals include but are not limited to alkali metals (group 1), alkaline-earth metals (group 2), aluminium (group 13), tin or lead (group 14), bismuth (group 15) or combinations thereof.

"Metalloid" is any chemical element with properties in between those of metals and nonmetals. The metalloids are all located in the p-block of the standard periodic table. Preferred metalloids can be, but are not limited to boron, carbon, silicon, germanium, arsenic, antimony, selenium, tellurium, polonium, astatine or combinations thereof. More preferred examples of metalloids are boron, silicon, germanium, antimony, or combinations thereof.

"Plasticisers" are additives that influence the plasticity or viscosity of a material. They can be added to a composition in order to alter the physical properties of the material. Suitable representatives of plasticisers are for example high-boiling esters of polybasic acids, such as citrates, phtalates, phosphoric acid derivatives (phosphates), particularly compounds of the formula O=P(OR)₃ where R is alkyl, alkoxyalkyl, phenyl or phenylalkyl for example, isopropylphenyl, phosphonic acid derivatives, phosphites, substituted fatty acids, fumarates, glutamates; high-boiling polyhydric alcohols, such as polyols, particularly glycols, polyglycols and glycerol, optionally terminally esterified; pentaerythritols; sulphonic acid derivatives, such as toluenesulphonamide; epoxy derivatives including epoxidised natural oils, such as the compounds of formula CH₃--(CH₂)n--A--(CH₂)n --R in which the A is an alkene containing one or more double bonds (i.e. unsaturated fatty acids), n is up to 25 and R is C2-15 alkyl, epoxidised esters of fatty acids, epoxidised soya bean oil, epoxidised linseed oils, epoxidised octyl tallate, epoxidised glycololeate; ricinoleates; adipates; chlorinated paraffins; polyesters, including polycaprolactone triol; polymeric esters; glutaric polyesters; adipic polyesters; succinic polyesters; silicone oils; mixtures of linear, branched or cyclic saturated hydrocarbons, having nine or more carbon atoms, particularly mineral oils; or combinations thereof.

A "master batch" is a solid or liquid composition which is suitable to be added to a natural or synthetic plastic composition. In the present invention the master batch comprises at least one metallasilsesquioxane, which is preferably present as a suspension and/or solution. The metallasilsesquioxane particularly can be used as a catalyst for curing natural or synthetic plastics. Hence the master batch - i.e. the composition resulting from step c) - preferably is an additive for curable plastic compositions. In a most preferred embodiment the master batch does not need any further modification and can directly be used as an additive. Preferably the carrier material of the master batch is compatible with the curable plastic.

It should be noted that, as used in the specification and the appended claims, the singular forms "a," "an," "the," include plural referents unless the context clearly dictates otherwise.

The term "alkyl" refers to straight or branched hydrocarbon radicals, such as methyl, ethyl, n-propyl, iso-propyl, n-butyl, iso-butyl, t-butyl, pentyl, sec-pentyl, hexyl, heptyl, octyl, decyl, tetradecyl, hexadecyl, eicosyl, tetracosyl, and the like. Alkyl groups can either be unsubstituted or can be stubstituted with one or more substituents, like halogen, alkoxy, aryl, arylalkyl, aralkoxy, and the like. Preferred are straight or branched C1 - C10 hydrocarbon radicals, such as methyl, ethyl, n-propyl, iso-propyl, n-butyl, iso-butyl, t-butyl, pentyl, sec-pentyl, hexyl, heptyl, octyl, decyl. More preferred are straight or branched C1 - C8 hydrocarbon radicals, such as methyl, ethyl, n-propyl, iso-propyl, n-butyl, iso-butyl, t-butyl, pentyl, sec-pentyl, hexyl, heptyl, octyl.

A "cycloalkyl" group is a non-aromatic carbon-based ring composed of at least three carbon atoms. Examples of cycloalkyl groups include, but are not limited to, cyclopropyl, cyclobutyl, cyclopentyl, cyclohexyl, and the like. Cycloalkyl also refers to "heterocycloalkyl" groups in which at least one of the carbon atoms of the ring is substituted with a heteroatom such as, but not limited to, nitrogen, oxygen, sulfur or phosphorus.

"Alkenyl" groups or alkenyl radicals are unsaturated compounds containing at least one carbon-carbon double bond and may be linear, branched or cyclic. Alkenyl groups include, but are not limited to, ethenyl, propenyl, butadienyl, butenyl, cyclohexenyl, vinyl, allyl, and the like. They can be substituted or unsubstituted. If substituted, substituents can include, for example, alkyl, alkenyl, alkynyl, aryl, halide, nitro, amino, ester, ketone, aldehyde, hydroxyl, carboxyclic acid, or alkoxy substitutents or combinations thereof.

"Alkynyle" groups or alkynyl radicals contain at least one triple bond between two carbon-carbon atoms and include groups such as, for example, ethynyl, propynyl, butynyl, and the like.

The term "aryl" or "aromatic" refers to a carbon based group that features a delocalized conjugated p electron system with 4n + 2 p electrons and a coplanar ring structure, wherein n is 0 or a non negative integer. Aromatic groups include benzene, cyclopentadiene (Cp), naphthalene, and the like. The aryl group can be substituted or unsubstituted. If substituted, substituents can include, for example, alkyl, alkynyl, elkenyl, aryl, halide, nitro, amino, ester, ketone, aldehyde, hydroxyl, carboxyclic acid, or alkoxy substituents or combinations thereof.

"Heteroaryl" groups are defined as aromatic groups having at least one heteroatom incorporated within the ring structure. Examples of heteroatoms include but are not limited to, nitrogen, oxygen, sulfur, and phosphorus.

"Ethers" as used herein are organic compounds containing at least one oxygen atom between two carbon atoms. The ethers may be substituted or unsubstituted.

"Ketones" as used herein are organic compounds containing a carbonyl group bonded to two other carbon atoms. "Ketons" also includes diketones and caclic ketones, as well as substituted ketones.

"Carboxylic acids" as used herein are organic acids characterized by the presence of at least one carboxyl group. Carboxylic acids can be aliphatic or aromatic and may contain substituted or unsubstituted carbons in addition to the carboxyl group. Substitutents can include halogens, alkyl groups, alkenyl groups, alkynyl groups, nitro groups, and combinations thereof. In some aspects, the carboxylic acids include dicarboxylic or tricarboxylic acids, such as, for example, formic acid, acetic acid, chloroacetic acid, dichloroacetic acid, trichloroacetic acid, oxalic acid, benzoic acid, propionic acid, butanoic acid, valeric acid, caproic acid, enanthic acid, caprylic acid, pelargonic acid, capric acid, lauric acid, myristic acid, palmitic acid, stearic acid, arachidic acid, malic acid, pyruvid acid, niacin, citric acid, succinic acid.

"Alkoxy" means an alkyl group, which is connected to the main chain of the molecule by an oxygen atom. The alkyl of "alkoxy" is the same as above "alkyl", and "alkoxy" includes, for example, methoxy, ethoxy, n-propoxy, iso-propoxy, n-butoxy, iso-butoxy, tert-butoxy, preferred is methoxy.

"alkoxyalkyl" means the above "alkyl" substituted with the above "alkoxy", including for example, methoxymethyl, ethoxymethyl, n-propoxymethyl, iso-propoxymethyl, n-butoxymethyl, iso-butoxymethyl, tert-butoxymethyl, methoxyethyl, ethoxyethyl, n-propoxyethyl, isopropoxyethyl, n-butoxyethyl, iso-butoxyethyl, tert-butoxyethyl.

The term "halide" means a member of the seventh group of the periodic table, such as, fluorine (F), chlorine (CI), bromine (Br), iodine (I), astatine (At), ununseptium (Uus), preferably chlorine (CI), bromine (Br) or iodine (I). "halide" also includes a member of the seventh group of the periodic table as a substitutent or radical, for example, fluoride, chloride, bromide, iodide and the like.

The term "polysiloxanes" or silicones refers to oligomeric or polymeric compounds comprising a silicon-oxygen (Si-O) backbone, having the formula (R₂SiO)*ₙ* with organic groups, such as methyl groups, attached to the silicon atoms.

### EXAMPLES

### Example 1 (general procedure)

One pot synthesis of metallasilsesquioxanes using consecutive addition of a metal halide and water. A silane was added dropwise to metal hydroxide and water in a polar solvent, preferably alkanols at a predetermined temperature. The reaction mixture was heated at reflux for a predetermined amount of time. After cooling the reaction mixture, a transition metal halide in a non-polar solvent was added. After stirring the mixture for a certrain amount of time at a predetermined temperature, water was added. The organic layer was isolated. Isolation can be conducted by addition of a solvent or a predetermined amount of a polysiloxane compound, followed by further isolation steps, such as distillation, filtration, evaporation, decantation, crystallization, pressure reduction, extraction, or combinations thereof.

### Example 2 (general procedure)

One pot synthesis of titanasilsesquioxanes using consecutive addition of titanium halide and water. Alkyl trialkoysilane was added dropwise to alkali hydroxide and water in ethanol at a predetermined temperature. The reaction mixture was heated at reflux for a predetermined amount of time. After cooling the reaction mixture, a titanium halide in toluene was added. After stirring the mixture for a certrain amount of time at a predetermined temperature, water was added. The organic layer was isolated. Isolation can be conducted by addition of a solvent or a predetermined amount of a polysiloxane compound, followed by further isolation steps, such as distillation, filtration, evaporation, decantation, crystallization, pressure reduction, extraction, or combinations thereof.

### Example 3

One pot synthesis of (iBu)₇Si₇O₁₂TiOEt using consecutive addition of titanium tetrachloride and water. Isobutyl trimethoxysilane (111 g, 622 mmol) was added dropwise to LiOH * H₂O (19.6 g, 466 mmol) and water (4.15 mL, 230 mmol) in ethanol (150 mL) at reflux. The reaction mixture was heated at reflux for 2 - 16 h (Time 1). After cooling to 0 - 10 °C, TiCl₄ (22.3 g, 114 mmol) in 200 mL of toluene was added. After stirring the mixture for 2 - 16 h (Time 2) at 20 °C - 30 °C, water (50 g, 2.3 mol) was added. The organic layer was isolated and combined with 200 mL of ethanol. Upon prolonged standing at -20 - 20 °C (iBu)₇Si₇O₁₂TiOEt precipitated as an ethanol adduct in 50 - 71% yield. Alternatively, evaporation to dryness of the organic layer, combined with 200 mL of ethanol, afforded (iBu)₇Si₇O₁₂TiOEt as an ethanol adduct in approximately quantitative yield. See table 1 for various experimental conditions.

**Table 1: Yield of (iBu)₇Si₇O₁₂TiOEt as a function of time**

| | **time 1 [h]** | **time 2 [h]** | **separation of layers** | **organic layer** | **yield [g]** |
|---|---|---|---|---|---|
| **1** | 4:30 | 16 | good | bottom | 38.5 |
| **2** | 2 | 16 | good | bottom | 40.0 |
| **3** | 18:30 | 2 | poor | top | 42.0 |
| **4** | 2:20 | 2 | good | bottom | 28.4 |
| **5** | 16 | 16 | good | bottom | 54.5 |

### Example 4

One pot synthesis of (iBu)₇Si₇O₁₂TiOEt using consecutive addition of titanium tetrachloride, water and polysiloxanes (silicones). Isobutyl trimethoxysilane (167 g, 938 mmol) was added dropwise to LiOH * H₂O (29.45 g, 702 mmol) and water (6.3 mL, 347 mmol) in ethanol (225 mL) at room temperature. The reaction mixture was heated at reflux for 7 h. After cooling to 5 °C, TiCl₄ (33.45 g, 176 mmol) in 300 mL of toluene was added. After stirring the mixture for 7 h at 20 °C - 30 °C, water (75 mL, 4.16 mol) was added. Isolation by vacuum distillation (215 mbar, 30 °C) and precipitation of the product by addition of polydimethylsiloxane fluid (120.0 g WM from Dow C.) afforded (iBu)₇Si₇O₁₂TiOEt (72.0 g, 81.7 mmol) in 46% yield. Alternatively, evaporation to dryness of the organic layer, combined with 200 mL of ethanol, afforded (iBu)₇Si₇O₁₂TiOEt as an ethanol adduct in approximately quantitative yield.

### Example 5

One pot synthesis of (C₈H₁₇)₇Si₇O₁₂TiOEt using consecutive addition of titanium tetrachloride and water. N-Octyltrimethoxysilane (164.4 g, 701 mmol) was added dropwise to LiOH * H₂O (22.0 g, 524.6 mmol) and water (4.7 mL, 260 mmol) in ethanol (225 mL) at room temperature. The reaction mixture was heated at reflux for 16 h. After cooling to 0 °C, TiCl₄ in (25.0 g, 132 mmol) in 230 mL toluene was added. After stirring the mixture for 16 h at room temperature, water (56 mL, 3.1 mol) was added.

Separation of the organic layer and isolation by distillation at reduced pressure (150 mbar, 32 °C) afforded (C₈H₁₇)₇Si₇O₁₂TiOEt (120,2 g, 94,2 mmol) in 71% yield.

### Example 6

One pot synthesis of (iBu)₇Si₇O₁₂TiO-iPr. Isobutyl trimethoxysilane was added dropwise to LiOH * H₂O and water in isopropanol (300 mL) at reflux. The reaction mixture was heated at reflux for 16 h. After cooling to 0 - 10 °C, TiCl₄ in 200 mL of toluene was added. After stirring the mixture for 8 h at 20 °C - 30 °C, water (50 g, 2.3 mol) was added. The organic layer was isolated, washed with water and combined with isopropanol.

Upon prolonged standing at 20 °C (iBu)₇Si₇O₁₂TiO-iPr precipitated as an isopropanol adduct in 65% yield.

Alternatively, evaporation to dryness of the organic layer, combined with ethanol, afforded (iBu)₇Si₇O₁₂TiOEt as an ethanol adduct in approximately quantitative yield.

### PARTICULARLY PREFERRED EMBODIMENTS

### Embodiment 1:

A process for the synthesis of a metallasilsesquioxane comprising the steps of
a. preparing a composition containing
   - at least one silane compound having the general formula R¹Si(OR²)₃; and R¹, R² are each independently hydrogen, alkyl, cycloalkyl, alkenyl, alkynyl, aryl or heteroaryl, and
   - at least one base, and
b. adding to said composition at least one transition metal halide,
   wherein the process is a one-pot process.

### Embodiment 2

The process according to any of the preceding embodiments, wherein the composition comprises at least one solvent, preferably at least one polar solvent, more preferably at least one polar protic solvent.

### Embodiment 3

The process according to embodiment 2, wherein the solvent is preferably selected from the group consisting of water, alkanols, iso-alkanols, ketones, carboxylic acids, dihalomethanes, alkyl ethers, alkyl nitriles, sulfoxides, alkyl formamides, phenols or combinations thereof, preferably selected from the group consisting of water, alkanols, iso-alkanols, carboxylic acids or combinations thereof, more preferably selected from the group consisting of water, ethanol, tert-butanol, iso-propanol, acetic acid or combinations thereof, most preferably selected from the group consisting of water, ethanol, or a combination thereof.

### Embodiment 4

The process according to embodiments 2 or 3, wherein the composition comprises at least two polar solvents.

### Embodiment 5

The process according to embodiment 4, wherein at least one of the two polar solvents is water.

### Embodiment 6

The process according to any preceding embodiments 2 to 5, wherein at least one solvent present in the composition is water.

### Embodiment 7

The process according to embodiment 6, wherein the molar ratio of R¹Si(OR²)₃, to base and water is 3 - 8 : 1 - 7 : 0.5 - 10 equivalents per mole of the metal compound, preferably 5 - 7 : 2 - 5 : 1 - 8 equivalents per mole of the metal compound, more preferably 5 - 6 : 3 - 4 : 1 - 7 equivalents per mole of the metal compound, most preferably 5 - 6 : 3 - 4 : 5 - 6 equivalents per mole of the metal compound.

### Embodiment 8

The process according to any of the preceding embodiments, wherein R¹ and R² are independently alkyl or aryl, preferably methyl, ethyl, iso-propyl, iso-butyl, hexyl, heptyl, octyl or phenyl.

### Embodiment 9

The process according to any of the preceding embodiments, wherein R¹Si(OR²)₃ is iso-propyltrimethoxysilane, iso-propyltriethoxysilane iso-butyltrimethoxysilane (IBTMO), iso-butyltriethoxysilane, hexyltrimethoxysilane, hexyltriethoxysilane, octyltrimethoxysilan, octyltriethoxysilane, phenyltrimethoxysilane or phenyltriethoxysilane, preferably iso-butyltrimethoxysilane or octyltrimethoxysilane.

### Embodiment 10

The process according to any of the preceding embodiments, wherein the composition is prepared with a concentration of the base from 0.2 to 10 equivalents per mole R¹Si(OR²)₃, preferably from 0.5 to 1 equivalents per mole R¹Si(OR²)₃, more preferably from 0.6 to 0.9 equivalents per mole R¹Si(OR²)₃.

### Embodiment 11

The process according to any of the preceding embodiments, wherein the composition is prepared with a concentration of at least one solvent from 0.5 to 10 equivalents per mole R¹SiX₃, preferably from 0.8 to 5 equivalents per mole R¹SiX₃, more preferably from 0.9 to 3 equivalents per mole R¹Si(OR²)₃.

### Embodiment 12

The process according to any of the preceding embodiments 4 to 11, wherein the composition is prepared with a concentration of one polar solvent from 0.5 to 10 equivalents per mole of the metal compound and a concentration of at least one further polar solvent of at least 10 equivalents per mole of the metal compound.

### Embodiment 13

The process according to embodiment 12, wherein the concentration of one polar solvent is from 1 to 8 equivalents per mole of the metal compound and the concentration of at least one further polar solvent is of at least 15 equivalents per mole of the metal compound.

### Embodiment 14

The process according to embodiment 13, wherein the concentration of one polar solvent is from 1 to 7 equivalents per mole of the metal compound and the concentration of at least one further polar solvent is at least 20 equivalents per mole of the metal compound.

### Embodiment 15

The process according to embodiment 14, wherein the concentration of one polar solvent is from 5 to 6 equivalents per mole of the metal compound and the concentration of at least one further polar solvent is at least 20 equivalents per mole of the metal compound.

### Embodiment 16

The process according to any of the preceding embodiments, wherein the redox potential of said transition metal compound is below -1 V at pH 14.

### Embodiment 17

The process according to any of the preceding embodiments, wherein the composition is heated to at least a boiling point of any solvent in the composition, preferably the composition is heated to at least 50 °C, preferably to at least 60 °C, most preferably to at least 70 °C, before the metal compound is added.

### Embodiment 18

The process according to any of the preceding embodiments, wherein the at least one metal compound is added to the composition when a silane compound having the general formula R₇Si₇O₉(OH)₃, R₇Si₇O₉(OM¹)₃ or a combination thereof, is detectable in the reaction mixture.

### Embodiment 19

The process according to embodiment 18, wherein M¹ is a member selected from the metals of the main groups 1., 2., or combinations thereof, preferably M¹ is a member selected from the metals of the main group 1 or a combination thereof.

### Embodiment 20

The process according to any of the preceding embodiments, wherein the at least one metal compound is added to the composition 1 to 24 h, preferably 2 to 20 h after the composition had been prepared.

### Embodiment 21

The process according to any of the preceding embodiments, wherein step (a) comprises cooling of the composition to at least 40 °C, preferably to at least 30 °C, most preferably to at least 10 °C before the metal compound is added.

### Embodiment 22

The process according to any of the preceding embodiments, wherein step (b) comprises cooling the composition or heating the composition before the metal compound is added.

### Embodiment 23

The process according to any of the preceding embodiments, wherein step (b) comprises cooling the composition to at least 10 °C, preferably to at least 0 °C, most preferably to at least -5°C.

### Embodiment 24

The process according to any of the preceding embodiments, wherein the base is selected from the group consisting of metal hydroxides, metal alkoxides, metal alkyls, metal carboxylates, metal carbonates, metal silanolates, quarternary ammonium derivatives, conjugate bases of weak acids, carbonate salts of organic cations, carbanions, metal amides, amines, alkanolamines, or combinations thereof.

### Embodiment 25

The process according to any of the preceding embodiments, wherein the base is selected from the group consisting of alkali metal hydroxides, alkali metal alkoxides, alkali metal carboxylates or combinations thereof, preferably lithium hydroxide, sodium hydroxide, lithium alkoxide, sodium alkoxide, lithium carboxylate, sodium carboxylate, alkyllithium, alkylsodium, alkenyllithium, alkenylsodium, aryllithium and arylsodium or combinations thereof.

### Embodiment 26

The process according to any of the preceding embodiments, wherein the base is lithium hydroxide, preferably lithium hydroxide monohydrate.

### Embodiment 27

The process according to any of the preceding embodiments, wherein the main group metal or metalloid of the at least one main group metal or metalloid compound is a member selected from the main groups 13, 14, 15, 16 or 17 or combinations thereof, preferably selected from the metals or metalloids of the main groups 13, 14, 15 or 16 or combinations thereof, most preferably the metals or metalloids are selected from the group consisting of boron, aluminium, gallium, indium, silicon, germanium, tin, antimony, bismuth, selenium, tellurium or combinations thereof.

### Embodiment 28

The process according to any of the preceding embodiments, wherein the transition metal (M) of the transition metal compound is a member selected from the metals of the subgroups 3., 4., 5., 6., 7., 8., 9, 10. and 11., preferably the transition metal is a member selected from the metals of subgroup 4.

### Embodiment 29

The process according to any of the preceding embodiments, wherein the metal compound comprises main group metals, main group metalloids, transition metals or a combination thereof.

### Embodiment 30

The process according to any of the preceding embodiments, wherein the transition metal compound is titanium tetrachloride.

### Embodiment 31

The process according to any of the preceding embodiments, wherein at least one metallasilsesquioxane is having the formula R₇Si₇O₁₂ML.

### Embodiment 32

The process according to any of the preceding embodiments, wherein L is selected from the group consisting of hydroxides, alkoxides, iso-alkoxides, enolates, carboxylates, dihalomethanides, (alkoxy)methanides, keteniminates, sulfinylmethanides, alkyl formamides, phenoxides, preferably selected from the group consisting of hydroxides, ethoxides, isopropoxides, acetone enolates, acetonitrile anions, phenoxides, or combinations thereof.

### Embodiment 33

The process according to any of the preceding embodiments, wherein at least one solvent is added to the metal compound, before the metal compound is added to the composition.

### Embodiment 34

The process according to embodiment 30, wherein said solvent is a non-polar solvent, preferably selected from the group consisting of hydrocarbons, aromatic hydrocarbons, tetrachloromethane, chloroform, alkoxyalkanes, cyclic alkoxyalkanes, dialkoxyalkanes, preferably selected from the group consisting of hydrocarbons or aromatic hydrocarbons or combinations thereof.

### Embodiment 35

A process for the synthesis of a titanasilsesquioxane comprising the steps of:
a. preparing a composistion containing
   - at least one silane compound having the general formula R¹SiX₃ with X are each independently a halide, OR² or NR³R⁴ and
      R¹, R², and R³ and R⁴ are each independently hydrogen, alkyl, cycloalkyl, alkenyl, aryl or heteroaryl
   - a metal hydroxide and
   - a polar solvent
b. adding to said composition titanium halide and a non-polar solvent,
   wherein the process is a one-pot process.

### Embodiment 36

A process for the synthesis of a titanasilsesquioxane comprising the steps of:
a. preparing a composistion containing
   - at least one silane compound having the general formula R¹SiX₃ with
      X are each independently a halide, OR² or NR³R⁴ and
      R¹, R², and R³ and R⁴ are each independently hydrogen, alkyl, cycloalkyl, alkenyl, aryl or heteroaryl
   - a metal hydroxide and
   - a polar solvent
b. adding to said composition titanium halide,
   wherein the process is a one-pot process.

### Embodiment 37

A process for the synthesis of a metallasilsesquioxane comprising the steps of:
a. preparing a composistion containing
   - at least one silane compound, having the general formula R¹Si(OR²)₃,
      wherein R¹ and R² are each independently alkyl or aryl, preferably the silane compound is iso-propyltrimethoxysilane, iso-propyltriethoxysilane iso-butyltrimethoxysilane (IBTMO), iso-butyltriethoxysilane, hexyltrimethoxysilane, hexyltriethoxysilane, octyltrimethoxysilan, octyltriethoxysilane, phenyltrimethoxysilane or phenyltriethoxysilane;
   - an alkali metal hydroxide and
   - a polar solvent and;
b. adding to said composition a transition metal halide and a non-polar solvent,
   wherein the process is a one-pot process.

### Embodiment 38

A process for the synthesis of a titanasilsesquioxane comprising the steps of:
a. preparing a composistion containing
   - at least one silane compound, having the general formula R¹Si(OR²)₃,
      wherein R¹ and R² are each independently alkyl or aryl,
   - an alkali metal hydroxide and;
   - a polar solvent selected from the group consisting of water, alkanols or iso-alkanols, or combinations thereof, and
b. adding to said composition titanium tetrachloride and a non-polar solvent selected from the group consisting of hydrocarbons or aromatic hydrocarbons, wherein the process is a one-pot process.

### Embodiment 39

A process for the synthesis of a titanasilsesquioxane comprising the steps of:
a. preparing a composistion containing isobutyltrimethoxysilane (IBTMO), lithium hydroxide monohydrate, water and ethanol and;
b. adding to said composition titanium tetrachloride and toluene,
   wherein the process is a one-pot process.

### Embodiment 40

The process according to any of the preceding embodiments, wherein the metallasilsesquioxane is separated from the composition (step c) by medium change, distillation, filtration, evaporation, decantation, crystallization, pressure reduction, extraction, or combinations thereof, preferably medium change,
wherein the process is a one-pot process.

### Embodiment 41

The process according to any of the preceding embodiments, wherein the metallasilsesquioxane having the formula R7Si7O12ML is separated (step c) by medium change, distillation, filtration, evaporation, decantation, crystallization, pressure reduction, extraction, or combinations thereof, preferably by medium change.

### Embodiment 42

The process according to any of the preceding embodiments, wherein (step c) is conducted by transferring said metallasilsesquioxane into a carrier system.

### Embodiment 43

The process according to any of the preceding embodiments, wherein the carrier system is selected from a group consisting of natural or synthetic waxes, natural or synthetic polymers, plasticisers or combinations thereof, preferably the carrier system are selected from a group consisting of plasticisers, particularly silicone oils.

## Claims

1. A process for the synthesis of a metallasilsesquioxane comprising the steps of
a. preparing a composition containing
- at least one silane compound having the general formula R¹Si(OR²)₃; wherein R¹, R² are each independently hydrogen, alkyl, cycloalkyl, alkenyl, alkynyl, aryl or heteroaryl, and
- at least one base, and
b. adding to said composition at least one transition metal halide,
wherein the process is a one-pot process.

2. The process according to claim 1, wherein the composition further comprises at least one solvent preferably at least one polar solvent, more preferably at least one polar protic solvent.

3. The process according to claim 1 or 2, wherein the solvent is preferably selected from the group consisting of water, alkanols, iso-alkanols, ketones, carboxylic acids, dihalomethanes, alkyl ethers, alkyl nitriles, sulfoxides, alkyl formamides, phenols or combinations thereof, preferably selected from the group consisting of water, alkanols, iso-alkanols, carboxylic acids or combinations thereof, more preferably selected from the group consisting of water, ethanol, tert-butanol, iso-propanol, acetic acid or combinations thereof, most preferably selected from the group consisting of water, ethanol, or a combination thereof.

4. The process according to claim 2 or 3, wherein at least one solvent present in the composition is water.

5. The process according to claim 4, wherein the molar ratio of R¹Si(OR²)₃, to base and water is 3 - 8 : 1 - 7 : 0.5 - 10 equivalents per mole of the metal compound, preferably 5 - 7 : 2 - 5 : 1 - 8 equivalents per mole of the metal compound, more preferably 5 - 6 : 3 - 4 : 1 - 7 equivalents per mole of the metal compound, most preferably 5 - 6 : 3 - 4 : 5 - 6 equivalents per mole of the metal compound.

6. The process according to any of the preceding claims, wherein R¹Si(OR²)₃ is iso-propyltrimethoxysilane, iso-propyltriethoxysilane, iso-butyltrimethoxysilane (IBTMO), iso-butyltriethoxysilane, hexyltrimethoxysilane, hexyltriethoxysilane, octyltrimethoxysilane, octyltriethoxysilane, phenyltrimethoxysilane or phenyltriethoxysilane.

7. The process according to any of the preceding claims, wherein the redox potential of said transition metal compound is below -1 V at pH 14.

8. The process according to any of the preceding claims, wherein step (b) comprises cooling the composition or heating the composition before the metal compound is added.

9. The process according to any of the preceding claims, wherein the base is selected from the group consisting of alkali metal hydroxides, alkali metal alkoxides, alkali metal carboxylates or combinations thereof, preferably lithium hydroxide, sodium hydroxide, lithium alkoxide, sodium alkoxide, lithium carboxylate, sodium carboxylate, alkyllithium, alkylsodium, alkenyllithium, alkenylsodium, aryllithium and arylsodium or combinations thereof.

10. The process according to any of the preceding claims, wherein the base is lithium hydroxide, preferably lithiumhydroxide monohydrate.

11. The process according to any of the preceding claims, wherein the transition metal (M) of the transition metal compound is a member selected from the metals of the subgroups 3., 4., 5., 6., 7., 8., 9, 10. and 11., preferably the transition metal (M) is a member selected from the metals of subgroup 4.

12. The process according to any of the preceding claims, wherein the transition metal compound is titanium tetrachloride.

13. A process for the synthesis of a titanasilsesquioxane comprising the steps of:
a. preparing a composistion containing
- at least one silane compound having the general formula R¹SiX₃ with X are each independently a halide, OR² or NR³R⁴ and
R¹, R², and R³ and R⁴ are each independently hydrogen, alkyl, cycloalkyl, alkenyl, aryl or heteroaryl
- a metal hydroxide and
- a polar solvent
b. adding to said composition titanium halide,
wherein the process is a one-pot process.

14. A process for the synthesis of a titanasilsesquioxane comprising the steps of:
a. preparing a composistion containing isobutyltrimethoxysilane (IBTMO), lithium hydroxide monohydrate, water and ethanol and;
b. adding to said composition titanium tetrachloride and toluene,
wherein the process is a one-pot process.

15. The process according to any of the preceding claims, wherein the metallasilsesquioxane is separated from the composition (step c) by medium change, distillation, filtration, evaporation, decantation, crystallization, pressure reduction, extraction, or combinations thereof, preferably medium change.

16. The process according to any of the preceding claims, wherein (step c) is conducted by transferring said metallasilsesquioxane into a carrier system, in particular for providing a master batch.

## Patentansprüche

1. Verfahren zur Synthese eines Metallsilsesquioxans, umfassend die Schritte:
a. Herstellen einer Zusammensetzung enthaltend
- mindestens eine Silanverbindung mit der allgemeinen Formel R¹Si(OR²)₃; worin
R¹, R² jeweils unabhängig voneinander Wasserstoff, Alkyl, Cycloalkyl, Alkenyl, Alkinyl, Aryl oder Heteroaryl sind, und
- mindestens eine Base, und
b. Hinzufügen mindestens eines Übergangsmetallhalogenids zu der Zusammensetzung,
wobei das Verfahren ein Eintopfverfahren ist.

2. Verfahren nach Anspruch 1, wobei die Zusammensetzung weiterhin mindestens ein Lösungsmittel, vorzugsweise mindestens ein polares Lösungsmittel, besonders bevorzugt mindestens ein polares protisches Lösungsmittel, umfasst.

3. Verfahren nach Anspruch 1 oder 2, wobei das Lösungsmittel vorzugsweise ausgewählt ist aus der Gruppe bestehend aus Wasser, Alkanolen, Iso-Alkanolen, Ketonen, Carbonsäuren, Dihalogenmethanen, Alkylethern, Alkylnitrilen, Sulfoxiden, Alkylformamiden, Phenolen oder Kombinationen davon, vorzugsweise ausgewählt aus der Gruppe bestehend aus Wasser, Alkanolen, Iso-Alkanolen, Carbonsäuren oder Kombinationen davon, besonders bevorzugt ausgewählt aus der Gruppe, bestehend aus Wasser, Ethanol, tert-Butanol, Isopropanol, Essigsäure oder Kombinationen davon, am meisten bevorzugt ausgewählt aus der Gruppe, bestehend aus Wasser, Ethanol oder einer Kombination davon.

4. Verfahren nach Anspruch 2 oder 3, wobei mindestens ein in der Zusammensetzung vorhandenes Lösungsmittel Wasser ist.

5. Verfahren nach Anspruch 4, wobei das Molverhältnis von R¹Si(OR²)₃ zu Base und Wasser 3 - 8 : 1 - 7 : 0,5 - 10 Äquivalente pro Mol der Metallverbindung beträgt, vorzugsweise 5 - 7 : 2 - 5 : 1 - 8 Äquivalente pro Mol der Metallverbindung, besonders bevorzugt 5 - 6 : 3 - 4 : 1 - 7 Äquivalente pro Mol der Metallverbindung, am meisten bevorzugt 5 - 6 : 3 - 4 : 5 : 5 - 6 Äquivalente pro Mol der Metallverbindung ist.

6. Verfahren nach einem der vorstehenden Ansprüche, wobei R¹Si(OR²)₃ iso-Propyltrimethoxysilan, iso-Propyltriethoxysilan, iso-Butyltrimethoxysilan (IBTMO), iso-Butyltriethoxysilan, Hexyltrimethoxysilan, Hexyltriethoxysilan, Octyltrimethoxysilan, Octyltriethoxysilan, Phenyltrimethoxysilan oder Phenyltriethoxysilan ist.

7. Verfahren nach einem der vorstehenden Ansprüche, wobei das Redoxpotential der Übergangsmetallverbindung unter -1 V bei pH 14 liegt.

8. Verfahren nach einem der vorstehenden Ansprüche, wobei Schritt (b) das Abkühlen der Zusammensetzung oder das Erhitzen der Zusammensetzung vor der Zugabe der Metallverbindung umfasst.

9. Verfahren nach einem der vorstehenden Ansprüche, wobei die Base ausgewählt ist aus der Gruppe bestehend aus Alkalimetallhydroxiden, Alkalimetallalkoxiden, Alkalimetallcarboxylaten oder Kombinationen davon, vorzugsweise Lithiumhydroxid, Natriumhydroxid, Lithiumalkoxid, Natriumalkoxid, Lithiumcarboxylat, Natriumcarboxylat, Alkyllithium, Alkylnatrium, Alkenyllithium, Alkenylnatrium, Aryllithium und Arylnatrium oder Kombinationen davon.

10. Verfahren nach einem der vorstehenden Ansprüche, wobei die Base Lithiumhydroxid ist, vorzugsweise Lithiumhydroxidmonohydrat.

11. Verfahren nach einem der vorhergehenden Ansprüche, wobei das Übergangsmetall (M) der Übergangsmetallverbindung ein Mitglied ist, das aus den Metallen der Untergruppen 3, 4, 5, 6, 7, 8, 9, 10 und 11 ausgewählt ist, vorzugsweise ist das Übergangsmetall (M) ein Mitglied, das aus den Metallen der Untergruppe 4 ausgewählt ist.

12. Verfahren nach einem der vorstehenden Ansprüche, wobei die Übergangsmetallverbindung Titantetrachlorid ist.

13. Verfahren zur Synthese eines Titansilsesquioxans, umfassend die Schritte:
a. Herstellung einer Zusammensetzung, enthaltend
- mindestens eine Silanverbindung mit der allgemeinen Formel R¹SiX₃, wobei X jeweils unabhängig voneinander ein Halogenid, OR² oder NR³R⁴ ist und
R¹, R² und R³ und R⁴ jeweils unabhängig voneinander Wasserstoff, Alkyl, Cycloalkyl, Alkenyl, Aryl oder Heteroaryl sind
- ein Metallhydroxid und
- ein polares Lösungsmittel
b. Hinzufügen von Titanhalogenid zu der Zusammensetzung,
wobei das Verfahren ein Eintopfverfahren ist.

14. Verfahren zur Synthese eines Titansilsesquioxans, umfassend die Schritte:
a. Herstellung einer Zusammensetzung, die Isobutyltrimethoxysilan (IBTMO), Lithiumhydroxidmonohydrat, Wasser und Ethanol enthält, und
b. Zugabe von Titantetrachlorid und Toluol zu dieser Zusammensetzung,
wobei das Verfahren ein Eintopfverfahren ist.

15. Verfahren nach einem der vorstehenden Ansprüche, wobei das Metallsilsesquioxan von der Zusammensetzung (Schritt c) durch Mediumwechsel, Destillation, Filtration, Verdampfung, Dekantierung, Kristallisation, Druckreduzierung, Extraktion oder Kombinationen davon, vorzugsweise durch Mediumwechsel, abgetrennt wird.

16. Verfahren nach einem der vorstehenden Ansprüche, bei dem (Schritt c) durch Überführen des Metallsilsesquioxans in ein Trägersystem, insbesondere zur Bereitstellung eines Masterbatches, durchgeführt wird.

## Revendications

1. Procédé de synthèse d'un métallasilsesquioxane comprenant les étapes consistant à :
a. préparer une composition contenant :
- au moins un composé silane de formule générale R¹Si(OR²)₃, dans laquelle R¹, R² sont chacun indépendamment un hydrogène, un alkyle, un cycloalkyle, un alcényle, un alcynyle, un aryle ou un hétéroaryle, et
- au moins une base, et
b. ajouter à ladite composition au moins un halogénure de métal de transition,
lequel procédé est un procédé monotope.

2. Procédé selon la revendication 1, dans lequel la composition comprend en outre au moins un solvant, de préférence au moins un solvant polaire, plus préférablement au moins un solvant protique polaire.

3. Procédé selon la revendication 1 ou 2, dans lequel le solvant est de préférence choisi dans le groupe constitué par l'eau, les alcanols, les iso-alcanols, les cétones, les acides carboxyliques, les dihalométhanes, les éthers alkyliques, les nitriles alkyliques, les sulfoxydes, les formamides alkyliques, les phénols ou des combinaisons de ceux-ci, de préférence choisi dans le groupe constitué par l'eau, les alcanols, les iso-alcanols, les acides carboxyliques ou des combinaisons de ceux-ci, plus préférablement choisi dans le groupe constitué par l'eau, l'éthanol, le tert-butanol, l'isopropanol, l'acide acétique ou des combinaisons de ceux-ci, encore plus préférablement choisi dans le groupe constitué par l'eau, l'éthanol ou une combinaison de ceux-ci.

4. Procédé selon la revendication 2 ou 3, dans lequel au moins un solvant présent dans la composition est de l'eau.

5. Procédé selon la revendication 4, dans lequel le rapport molaire de R¹Si(OR²)₃ sur la base et sur l'eau est de 3 - 8 : 1 - 7 : 0,5 - 10 équivalents par mole du composé métallique, de préférence de 5 - 7 : 2 - 5 : 1 - 8 équivalents par mole du composé métallique, plus préférablement 5 - 6 : 3 - 4:1 - 7 équivalents par mole du composé métallique, encore plus préférablement 5 - 6: 3 - 4: 5 - 6 équivalents par mole du composé métallique.

6. Procédé selon l'une quelconque des revendications précédentes, dans lequel R¹Si(OR²)₃ est l'iso-propyltriméthoxysilane, l'iso-propyltriéthoxysilane, l'iso-butyltriméthoxysilane (IBTMO), l'iso-butyltriéthoxysilane, l'hexyltriméthoxysilane, l'hexyltriéthoxysilane, l'octyltriméthoxysilane, l'octyltriéthoxysilane, le phényltriméthoxysilane ou le phényltriéthoxysilane.

7. Procédé selon l'une quelconque des revendications précédentes, dans lequel le potentiel redox dudit composé métallique de transition est inférieur à -1 V à pH 14.

8. Procédé selon l'une quelconque des revendications précédentes, dans lequel l'étape (b) comprend l'opération consistant à refroidir la composition ou à chauffer la composition avant que le composé métallique ne soit ajouté.

9. Procédé selon l'une quelconque des revendications précédentes, dans lequel la base est choisie dans le groupe constitué par les hydroxydes de métal alcalin, les alcoxydes de métal alcalin, les carboxylates de métal alcalin ou des combinaisons de ceux-ci, de préférence l'hydroxyde de lithium, l'hydroxyde de sodium, l'alcoxyde de lithium, l'alcoxyde de sodium, le carboxylate de lithium, le carboxylate de sodium, l'alkyle de lithium, l'alkyle de sodium, l'alcényle de lithium, l'alcényle de sodium, l'aryle de lithium et l'aryle de sodium ou des combinaisons de ceux-ci.

10. Procédé selon l'une quelconque des revendications précédentes, dans lequel la base est l'hydroxyde de lithium, de préférence l'hydroxyde de lithium monohydraté.

11. Procédé selon l'une quelconque des revendications précédentes, dans lequel le métal de transition (M) du composé métallique de transition est un élément choisi parmi les métaux des sous-groupes 3, 4, 5, 6, 7, 8, 9, 10 et 11, de préférence le métal de transition (M) est un élément choisi parmi les métaux du sous-groupe 4.

12. Procédé selon l'une quelconque des revendications précédentes, dans lequel le composé métallique de transition est le tétrachlorure de titane.

13. Procédé de synthèse d'un titanasilsesquioxane comprenant les étapes consistant à :
a. préparer une composition contenant :
- au moins un composé silane de formule générale R¹SiX₃, dans laquelle X sont chacun indépendamment un halogénure, OR² ou NR³R⁴ et
R¹, R², et R³ et R⁴ sont chacun indépendamment un hydrogène, un alkyle, un cycloalkyle, un alcényle, un aryle ou un hétéroaryle
- un hydroxyde de métal et
- un solvant polaire
b. ajouter à ladite composition un halogénure de titane,
lequel procédé est un procédé monotope.

14. Procédé de synthèse d'un titanesilsesquioxane comprenant les étapes consistant à :
a. préparer une composition contenant de l'isobutyltriméthoxysilane (IBTMO), de l'hydroxyde de lithium monohydraté, de l'eau et de l'éthanol, et
b. ajouter à ladite composition du tétrachlorure de titane et du toluène, lequel procédé est un procédé monotope.

15. Procédé selon l'une quelconque des revendications précédentes, dans lequel le métallasilsesquioxane est séparé de la composition (étape c) par changement de milieu, distillation, filtration, évaporation, décantation, cristallisation, réduction de pression, extraction, ou des combinaisons de ceux-ci, de préférence changement de milieu.

16. Procédé selon l'une quelconque des revendications précédentes, dans lequel l'étape c est réalisée en transférant ledit métallasilsesquioxane dans un système porteur, en particulier pour fournir un mélange-maître.
